# EUROPEAN PATENT APPLICATION

(11) **EP 4 503 380 A1**
(43) Date of publication of application: **05.02.2025**
(21) Application number: 22941501.3
(22) Date of filing: 05.12.2022
(51) Int. Cl.: H02J 9/06, H02J 4/00, H02J 3/02, H02J 1/00, H02J 5/00

(54) **POWER DISTRIBUTION CIRCUIT, METHOD FOR CONTROLLING POWER SUPPLY OF POWER DISTRIBUTION CIRCUIT, AND POWER SUPPLY SYSTEM**

(30) Priority: 10.05.2022 CN 202210501244
(71) Applicant: Huawei Digital Power Technologies Co., Ltd., Shenzhen, Guangdong 518043 (CN)
(72) Inventor: ZHANG, Chuntao, Shenzhen, Guangdong 518043 (CN); CHU, Xin, Shenzhen, Guangdong 518043 (CN)
(74) Representative: Maiwald GmbH
(86) International application number: PCT/CN2022/136516
(87) International publication number: WO 2023/216566

(57) **Abstract**

This application provides a power distribution circuit, and relates to the field of power supply technologies. The power distribution circuit includes an alternating current input end, a direct current input end, an alternating current load input end, a direct current load input end, a switch circuit, a direct current/alternating current converter, a direct current/direct current converter, and a control unit. The switch circuit is coupled between the alternating current input end and the alternating current load input end. One end of the direct current/alternating current converter is coupled to the switch circuit and the alternating current load input end, and the other end of the direct current/alternating current converter is coupled to the direct current input end and the direct current/direct current converter. One end of the direct current/direct current converter is coupled to the direct current/alternating current converter and the direct current input end, and the other end of the direct current/direct current converter is coupled to the direct current load input end. The control unit is electrically connected to the switch circuit, the direct current/alternating current converter, and the direct current/direct current converter. The power distribution circuit may convert an alternating current input by a mains system into a stable direct current and a stable alternating current, to provide stable electrical signals for an alternating current load and a direct current load.

## Description

This application claims priority to Chinese Patent Application No. 202210501244.2, filed with the China National Intellectual Property Administration on May 10, 2022 and entitled "POWER DISTRIBUTION CIRCUIT, METHOD FOR CONTROLLING POWER SUPPLYING OF POWER DISTRIBUTION CIRCUIT, AND POWER SUPPLY SYSTEM", which is incorporated herein by reference in its entirety.

### TECHNICAL FIELD

The present invention relates to the field of power supply technologies, and in particular, to a power distribution circuit, a method for controlling power supplying of the power distribution circuit, and a power supply system.

### BACKGROUND

Power-consuming devices such as a data center, an outdoor cabinet, and a base station are generally connected to a power supply through power distribution circuits. The power distribution circuit may convert an alternating current provided by a mains system into a direct current, to supply the direct current to the power-consuming device. Alternatively, the power distribution circuit may convert a direct current provided by a power storage battery into an alternating current, to supply the alternating current to the power-consuming device.

An uninterruptible power system (uninterruptible power system, UPS) is generally further configured in a conventional power distribution circuit. When an external power supply cannot supply power to the power-consuming device, the power distribution circuit can invoke the UPS to supply power to the power-consuming device. However, the conventional power distribution circuit can output only an alternating current or a direct current, and cannot provide electric energy for both an alternating current load and a direct current load. As a result, an application scope of the power distribution circuit is small, and a power supply manner is not flexible.

### SUMMARY

To resolve the foregoing problem, embodiments of this application provide a power distribution circuit, a method for controlling power supplying of the power distribution circuit, and a power supply system. The power distribution circuit is electrically connected to a mains system and a battery module. When the mains system supplies power normally, the power distribution circuit may convert an alternating current power input by the mains system into a stable direct current and a stable alternating current, to provide stable electrical signals for an alternating current load and a direct current load. When the mains system is abnormal, the power distribution circuit may convert a direct current input by the battery module into a stable direct current and a stable alternating current, to provide stable electrical signals for an alternating current load and a direct current load.

In view of this, the following technical solutions are used in embodiments of this application.

According to a first aspect, this application provides a power distribution circuit, including: an alternating current input end, a direct current input end, an alternating current load input end, a direct current load input end, a switch circuit, a direct current/alternating current converter, a direct current/direct current converter, and a control unit. The switch circuit is coupled between the alternating current input end and the alternating current load input end, and is configured to control the alternating current load input end to output an alternating current input through the alternating current input end. One end of the direct current/alternating current converter is coupled to the switch circuit and the alternating current load input end, the other end of the direct current/alternating current converter is coupled to the direct current input end and the direct current/direct current converter, and the direct current/altemating current converter is configured to perform conversion on a direct current and an alternating current. One end of the direct current/direct current converter is coupled to the direct current/altemating current converter and the direct current input end, the other end of the direct current/direct current converter is coupled to the direct current load input end, and the direct current/direct current converter is configured to perform direct current conversion on an input direct current. The control unit is electrically connected to the switch circuit, the direct current/alternating current converter, and the direct current/direct current converter, and is configured to: detect a status of the switch circuit; and when the switch circuit is in a first state, send a first control signal to the direct current/alternating current converter and send a second control signal to the direct current/direct current converter, where the first state is a state in which the switch circuit enables the alternating current input end and the alternating current load input end to be connected, the first control signal indicates the direct current/alternating current converter to convert the alternating current input through the alternating current input end into a direct current, and the second control signal indicates the direct current/direct current converter to perform direct current conversion on a direct current output through the direct current/altemating current converter.

In this implementation, after receiving an alternating current of a mains system, the power distribution circuit can provide electric energy for each alternating current load. The control unit in the power distribution circuit may work through the DC/AC converter and the DC/DC converter, the DC/AC converter converts the alternating current into the direct current, and the DC/DC converter converts the direct current into a direct current of a specified voltage, to provide electric energy for each direct current load. The power distribution circuit can provide electric energy for both the alternating current load and the direct current load.

In an implementation, the control unit is further configured to: when the switch circuit is in a second state, send a third control signal to the direct current/alternating current converter and send a fourth control signal to the direct current/direct current converter, where the second state is a state in which the switch circuit enables the alternating current input end and the alternating current load input end to be disconnected, the third control signal indicates the direct current/alternating current converter to convert a direct current input through the direct current input end into an alternating current, and the second control signal indicates the direct current/direct current converter to perform direct current conversion on the direct current input through the direct current input end.

In this implementation, if the alternating current input by the mains system is abnormal, the switch circuit stops inputting of the alternating current by the mains system. The control unit enables the DC/AC converter to convert the direct current input through the direct current input end into an alternating current of a specified voltage, to supply an alternating current of a specified voltage to each alternating current load. The direct current input through the direct current input end may supply a direct current of a specified voltage to each direct current load through the DC/DC converter. The power distribution circuit can continuously provide electric energy for the alternating current load and the direct current load.

In one implementation, the switch circuit is a static transfer switch.

In this implementation, the static transfer switch is a switch that is switched on only when an input voltage falls within a specified range. Only when a voltage of the alternating current input through the alternating current input end falls within a specified range, the alternating current is input to the alternating current load through the alternating current load input end, to ensure stability of an alternating current output through the alternating current load input end.

In an implementation, the control unit is specifically configured to: monitor the voltage of the alternating current input through the alternating current input end; and when the voltage of the alternating current input through the alternating current input end falls within the specified range, determine that the switch circuit is in the first state; or when the voltage of the alternating current input through the alternating current input end does not fall within the specified range, determine that the switch circuit is in the second state.

In an implementation, the control unit is further configured to: monitor the voltage of the alternating current input through the alternating current input end; and when the voltage of the alternating current input through the alternating current input end falls within the specified range and is less than a specified threshold, send a fifth control signal to the direct current/alternating current converter, where the fifth control signal indicates the direct current/alternating current converter to convert the direct current input through the direct current input end into an alternating current of a specified voltage, and the specified voltage is a difference between the specified threshold and the voltage of the alternating current input through the alternating current input end.

In this implementation, if the alternating current input through the alternating current input end is unstable or is lower than a rated voltage of an alternating current load, the control unit may generate a control signal based on a difference between the rated voltage of each alternating current load and a voltage value of the input alternating current, and send the control signal to the DC/AC converter. The DC/AC converter may convert the direct current input through the direct current input end into an alternating current of a specified voltage. The alternating current output through the DC/AC converter may dynamically compensate for the alternating current input by the mains system, so that the power distribution circuit outputs a stable alternating current.

In an implementation, the power distribution circuit further includes a voltage regulator, coupled between the alternating current input end and the alternating current load input end, and configured to convert the alternating current output through the alternating current load input end into an alternating current of the specified threshold.

In this implementation, the voltage regulator is connected between the alternating current input end and the alternating current load input end, so that the alternating current input through the alternating current input end can be stabilized at the specified voltage, and stability of the alternating current output by the power distribution circuit can be improved.

In an implementation, the power distribution circuit further includes: a bypass circuit, coupled between the alternating current input end and the alternating current load input end, and configured to: when a circuit in which the switch circuit is located is disconnected, control the alternating current load input end to output the alternating current input through the alternating current input end, and/or control the direct current load input end to output a direct current.

In an implementation, the bypass circuit is connected between the alternating current input end and the alternating current load input end. When the circuit in which the switch circuit is located is short-circuited, the alternating current input through the alternating current input end is input to the alternating current load through the bypass circuit, thereby improving a fault tolerance rate of the power distribution circuit.

According to a second aspect, this application provides a method for controlling power supplying of a power distribution circuit. The method includes: detecting whether a switch circuit is in a first state, where the first state is a state in which the switch circuit enables an alternating current input end and an alternating current load input end to be connected; and when the switch circuit is in the first state, sending a first control signal to a direct current/alternating current converter and sending a second control signal to a direct current/direct current converter, where the first control signal indicates the direct current/alternating current converter to convert an alternating current input through the alternating current input end into a direct current, and the second control signal indicates the direct current/direct current converter to perform direct current conversion on a direct current output through the direct current/altemating current converter.

In an implementation, the method further includes: when the switch circuit is not in the first state, sending a third control signal to the direct current/alternating current converter and sending a fourth control signal to the direct current/direct current converter, where the third control signal indicates the direct current/altemating current converter to convert a direct current input through the direct current input end into an alternating current, and the second control signal indicates the direct current/direct current converter to perform direct current conversion on the direct current input through the direct current input end.

In an implementation, the detecting whether a switch circuit is in a first state includes: monitoring a voltage of the alternating current input through the alternating current input end; and when the voltage of the alternating current input through the alternating current input end falls within a specified range, determining that the switch circuit is in the first state; or when the voltage of the alternating current input through the alternating current input end does not fall within a specified range, determining that the switch circuit is not in the first state.

In an implementation, the method further includes: monitoring the voltage of the alternating current input through the alternating current input end; and when the voltage of the alternating current input through the alternating current input end falls within the specified range and is less than a specified threshold, sending a fifth control signal to the direct current/alternating current converter, where the fifth control signal indicates the direct current/alternating current converter to convert the direct current input through the direct current input end into an alternating current of a specified voltage, and the specified voltage is a difference between the specified threshold and the voltage of the alternating current input through the alternating current input end.

According to a third aspect, this application provides a power supply system, including: the power distribution circuit according to the implementations of the first aspect; an alternating current power supply, coupled to the alternating current input end in the power distribution circuit, and configured to supply an alternating current; a direct current power supply, coupled to the direct current input end in the power distribution circuit, and configured to supply a direct current; at least one alternating current load, coupled to the alternating current load input end of the power distribution circuit, and configured to receive an alternating current; and at least one direct current load, coupled to the direct current load input end of the power distribution circuit, and configured to receive a direct current.

### BRIEF DESCRIPTION OF DRAWINGS

The following briefly describes accompanying drawings required for describing embodiments or a conventional technology.
FIG. 1 is a schematic diagram of a circuit structure of a power distribution circuit in a conventional technology;
FIG. 2 is a schematic diagram of a circuit structure of another power distribution circuit in a conventional technology;
FIG. 3 is a schematic diagram of a circuit structure of a power distribution circuit according to an embodiment of this application;
FIG. 4 is a schematic diagram of an application scenario of a power distribution circuit according to an embodiment of this application;
FIG. 5 is a schematic diagram of a circuit structure of another power distribution circuit according to an embodiment of this application;
FIG. 6 is a schematic diagram of a scenario in which a power distribution circuit outputs only an alternating current according to an embodiment of this application;
FIG. 7 is a schematic diagram of a scenario in which a power distribution circuit outputs only a direct current according to an embodiment of this application;
FIG. 8 is a schematic diagram of a scenario in which another power distribution circuit outputs only a direct current according to an embodiment of this application;
FIG. 9 is a schematic diagram of a scenario in which another power distribution circuit outputs only a direct current according to an embodiment of this application; and
FIG. 10 is a flowchart of a method for controlling power supplying of a power distribution circuit according to an embodiment of this application.

### DESCRIPTION OF EMBODIMENTS

The following describes the technical solutions in embodiments of this application with reference to the accompanying drawings in embodiments of this application.

The term "and/or" in this specification describes an association relationship between associated objects and indicates that three relationships may exist. For example, A and/or B may indicate the following three cases: Only A exists, both A and B exist, and only B exists. The character "/" in this specification indicates an "or" relationship between the associated objects. For example, A/B indicates A or B.

In the specification and claims of this application, the terms "first", "second", and the like are intended to distinguish between different objects, but do not indicate a particular order of the objects. For example, a first response message, a second response message, and the like are used to distinguish between different response messages, but do not indicate a particular order of the response messages.

In addition, in embodiments of this application, the word "example" or "for example" is used to indicate giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

In the description of embodiments of this application, unless otherwise specified, "a plurality of" means two or more. For example, a plurality of control units means two or more control units, and a plurality of elements means two or more elements.

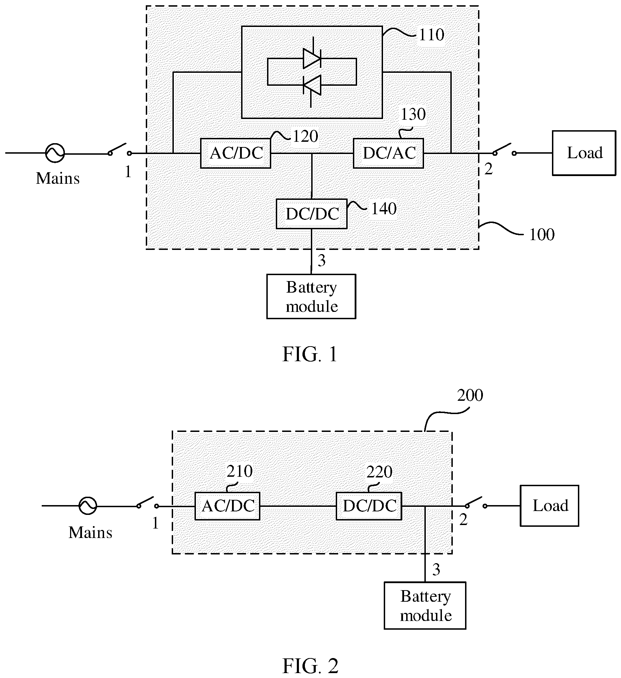

FIG. 1 is a schematic diagram of a circuit structure of a power distribution circuit in a conventional technology. As shown in FIG. 1, the power distribution circuit 100 includes a switch circuit 110, an alternating current/direct current (alternating current/directing current, AC/DC) converter 120, a direct current/alternating current (directing current/alternating current, DC/AC) converter 130, and a direct current/directing current (directing current/directing current, DC/DC) converter 140. The AC/DC converter 120 is connected in series with the DC/AC converter 130. The other end of the AC/DC converter 120 serves as an input end 1, and is electrically connected to a mains system. The other end of the DC/AC converter 130 serves as an output end 2, and is electrically connected to each load. One end of the DC/DC converter 140 is electrically connected between the AC/DC converter 120 and the DC/AC converter 130; and the other end of the DC/DC converter 140 serves as an input end 3, and is electrically connected to a battery module, to form a UPS. Two ends of the switch circuit 110 are electrically connected to the input end 1 and the output end 2 respectively.

In the conventional technology, when the mains system supplies power normally, an alternating current input by the mains system may directly provide electric energy for each alternating current load through the switch circuit 110. The alternating current input by the mains system may be converted through the AC/DC converter 120 and the DC/AC converter 130, to obtain a stable alternating current, so as to supply the stable alternating current to the alternating current load. When the mains system is abnormal, the alternating current load is powered by the battery module. A direct current input by the battery module passes through the DC/DC converter 140 to obtain a stable direct current, and then the stable direct current is converted through the DC/AC converter 130, to supply a stable alternating current to the alternating current load. However, the conventional power distribution circuit 100 can output only the stable alternating current, but cannot output a stable direct current.

FIG. 2 is a schematic diagram of a circuit structure of a power distribution circuit in a conventional technology. As shown in FIG. 2, the power distribution circuit 200 includes an AC/DC converter 210 and a DC/DC converter 220. The AC/DC converter 210 is connected in series with the DC/DC converter 220. The other end of the AC/DC converter 210 serves as an input end 1, and is electrically connected to a mains system. The other end of the DC/DC converter 220 may serve as an output end 2 and an input end 3. The output end 2 is electrically connected to each load. The input end 3 is electrically connected to a battery module.

In the conventional technology, when the mains system supplies power normally, an alternating current input by the mains system is converted through the AC/DC converter 210 and the DC/DC converter 220, to obtain a stable direct current, so as to supply a stable alternating current to a direct current load. When the mains system is abnormal, the direct current load is powered by the battery module. However, the conventional power distribution circuit 200 can output only the stable direct current, but cannot output a stable alternating current.

To overcome disadvantages in the conventional technology, a power distribution circuit is designed in this application. The power distribution circuit is electrically connected to a mains system and a battery module. When the mains system supplies power normally, the power distribution circuit may convert an alternating current power input by the mains system into a stable direct current and a stable alternating current, to provide stable electrical signals for an alternating current load and a direct current load. When the mains system is abnormal, the power distribution circuit may convert a direct current input by the battery module into a stable direct current and a stable alternating current, to provide stable electrical signals for an alternating current load and a direct current load. Compared with the conventional power distribution circuit, the power distribution circuit protected in this application can provide the stable electrical signals for both the direct current load and the alternating current load, thereby improving an application scenario of the power distribution circuit.

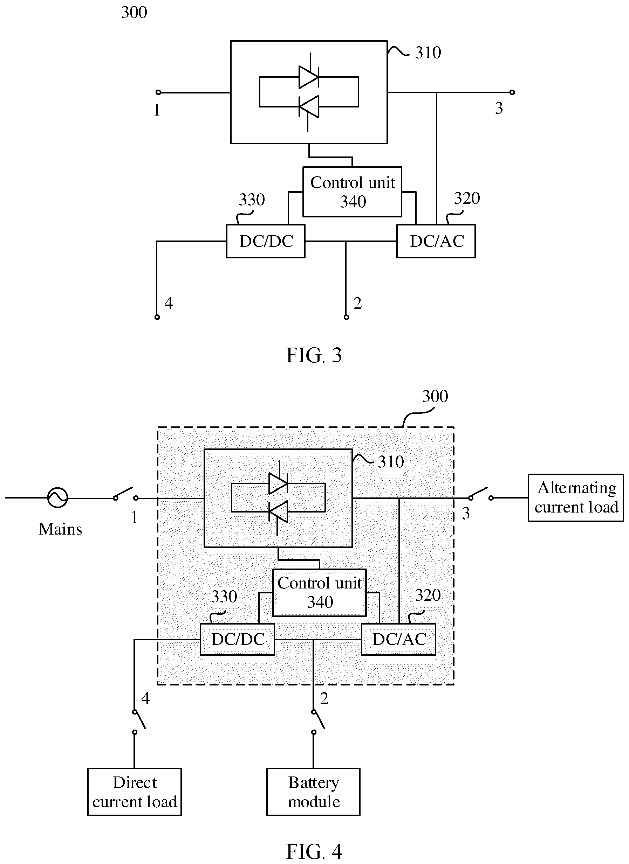

FIG. 3 is a schematic diagram of a circuit structure of a power distribution circuit according to an embodiment of this application. As shown in FIG. 3, the power distribution circuit 300 includes an alternating current input end 1, a direct current input end 2, an alternating current load input end 3, a direct current load input end 4, a switch circuit 310, a DC/AC converter 320, a DC/DC converter 330, and a control unit 340. The switch circuit 310 is coupled between the alternating current input end 1 and the alternating current load input end 3. One end of the DC/AC converter 320 is coupled to the switch circuit 310 and the alternating current load input end 3, and the other end of the DC/AC converter 320 is coupled to the direct current input end 2. One end of the DC/DC converter 330 is coupled to the DC/AC converter 320 and the direct current input end 2, and the other end of the DC/DC converter 330 is coupled to the direct current load input end 4. The control unit 340 may be electrically connected to the switch circuit 310, the DC/AC converter 320, and the DC/DC converter 330.

In this application, a switch is disposed between a mains system and the alternating current input end 1, and the switch may control the mains system to input an alternating current. A switch is disposed between the alternating current load input end 3 and each alternating current load, and the switch may control supply of an alternating current to each alternating current load. A switch is disposed between the direct current input end 2 and a battery module. The switch may control supply of a direct current to the battery module, and control the battery module to provide electric energy for a direct current load and an alternating current load. A switch is disposed between the direct current load input end 4 and each direct current load, and the switch may control supply of a direct current to each direct current load.

The switch circuit 310 is configured to control the alternating current load input end 3 to output the alternating current of the mains system, and control the direct current load input end 4 to output a direct current. In this application, the switch circuit 310 is preferably a static transfer switch (static transfer switch, STS). Certainly, the switch circuit 310 may alternatively be another type of switch. This is not limited in this application. The STS is a switch that automatically switches between two power supplies for power supplying. In a normal working state, if a main power supply falls within a normal voltage range, a load is connected to the main power supply. If the main power supply is abnormal, the STS automatically switches the load to a standby power supply. If the main power supply returns to the normal state, the STS automatically switches the load to the main power supply. In this application, the STS is in a first state only when a voltage value of an alternating current of the STS falls within a specified range, so that a voltage value of an alternating current flowing into the power distribution circuit can be limited, and stability of an alternating current input to each alternating current load can be ensured.

In this application, if the alternating current input by the mains system falls within the normal voltage range, the switch circuit 310 is in the first state. In other words, the alternating current input by the mains system is input to each alternating current load through the switch circuit 310, so that the mains system supplies power to the alternating current load. If the alternating current input by the mains system does not fall within the normal voltage range, the switch circuit 310 is in a second state. In other words, the switch circuit 310 is disconnected, and the mains system cannot supply power to the alternating current load.

The DC/AC converter 320 is a converter that converts a direct current into an alternating current with a stable output voltage and a stable frequency, and converts an alternating current into a direct current with a stable output voltage. Optionally, as shown in FIG. 3, if the direct current input end 2 is electrically connected to the battery module, the DC/AC converter 320 and the battery module may form a UPS. When the switch circuit 310 is in the second state, after the direct current of the battery module passes through the DC/AC converter 320, the DC/AC converter 320 converts the direct current into an alternating current to supply the alternating current to the alternating current load, so that the power distribution circuit 300 continuously provides electric energy for the alternating current load.

The DC/DC converter 330 is a converter that converts a direct current into a direct current with a stable output voltage. Optionally, as shown in FIG. 3, if the direct current load input end 4 is electrically connected to each direct current load, the DC/DC converter 330 may convert a direct current of another voltage into a direct current of a specified threshold, to supply a direct current of a specified voltage to the direct current load.

The control unit 340 may be a device that has a processing function, such as a digital signal processor (digital signal processing, DSP) or a system on chip (system on chip, SoC). In this application, the control unit 340 is configured to: monitor an electrical signal input to the switch circuit 310, an input electrical signal and/or an output electrical signal of the DC/AC converter 320, and an input electrical signal and/or an output electrical signal of the DC/DC converter 330, and send control signals to the DC/AC converter 320 and the DC/DC converter 330, so that the DC/AC converter 320 and the DC/DC converter 330 output electrical signals of specified voltages.

As shown in FIG. 4, an application scenario of the power distribution circuit 300 is as follows: The alternating current input end 1 may be electrically connected to the mains system, and is configured to receive the alternating current of the mains system. The alternating current load input end 3 may be electrically connected to a plurality of alternating current loads, and is configured to supply the alternating current to the alternating current loads. The direct current input end 2 may be electrically connected to the battery module, and is configured to receive the direct current of the battery module. The direct current load input end 4 may be electrically connected to a plurality of direct current loads, and is configured to supply the direct current to the direct current loads. In an example, the direct current input end 2 may be electrically connected to a plurality of direct current loads, and is configured to supply the direct current to the direct current loads. The direct current load input end 4 may be electrically connected to the battery module, and is configured to receive the direct current input by the battery module.

The following describes a specific working process of the power distribution circuit 300 protected in this application based on the application scenario shown in FIG. 4. It may be understood that the application scenario shown in FIG. 4 is merely an application scenario of the power distribution circuit 300, and the power distribution circuit 300 protected in this application may be further used in another scenario. This is not limited herein.

As shown in FIG. 4, if the alternating current input by the mains system falls within a specified threshold range, the mains system may supply the alternating current to each alternating current load through the switch circuit 310. The mains system may provide electric energy for the battery module through the switch circuit 310 and the DC/AC converter 320, so that the battery module is charged. The mains system may supply the direct current to each direct current load through the switch circuit 310, the DC/AC converter 320, and the DC/DC converter 330.

The control unit 340 monitors a voltage value of an alternating current input to the switch circuit 310. If the voltage value of the alternating current input to the switch circuit 310 falls within a specified range, the switch circuit 310 is in the first state. If the voltage value of the alternating current input to the switch circuit 310 does not fall within a specified range, the switch circuit 310 is in the second state. The control unit 340 may determine, based on a monitoring result, whether the switch circuit 310 is in the first state. If the control unit 340 detects that the voltage value of the alternating current input to the switch circuit 310 falls within a specified range, the switch circuit 310 is in the first state, and the control unit 340 discards monitoring data received this time or does not perform subsequent processing on the monitoring data received this time. The power distribution circuit 300 inputs the alternating current input by the mains system to the alternating current load, to provide electric energy for the alternating current load. The power distribution circuit 300 converts the alternating current input by the mains system into a direct current, and inputs the direct current to the direct current load, to provide electric energy for the direct current load.

If the control unit 340 detects that the voltage value of the alternating current input to the switch circuit 310 does not fall within the specified range, the switch circuit 310 is in the second state, and the power distribution circuit 300 stops power supplying of the mains system. The control unit 340 sends a control signal to the DC/AC converter 320, so that the DC/AC converter 320 converts the direct current input by the battery module into an alternating current of a specified voltage, so that the battery module supplies the alternating current to the alternating current load. The control unit 340 sends a control signal to the DC/DC converter 330, so that the DC/DC converter 330 converts the direct current into the direct current of the specified voltage, so that the battery module supplies the direct current to the direct current load. When the mains system is abnormal, the power distribution circuit 300 provides electric energy for the direct current load and the alternating current load through the battery module, so that the power distribution circuit 300 continuously provides electric energy for the direct current load and the alternating current load.

The specified range is a voltage value at which the switch circuit 310 is switched to the second state from the first state. A voltage value within the specified range is related to a rated voltage of the alternating current load. If there is no voltage conversion component between the alternating current input end 1 and the alternating current load input end 3, the voltage value within the specified range is the same as the rated voltage of the alternating current load. If there is another voltage conversion component between the alternating current input end 1 and the alternating current load input end 3, the voltage value within the specified range may be the same as or different from the rated voltage of the alternating current load.

Optionally, a voltage regulator is connected in series between the alternating current input end 1 and the alternating current load input end 3, and the voltage regulator is further electrically connected to the control unit 340. The control unit 340 receives the monitoring result, and determines whether the voltage value input to the switch circuit 310 is stable or whether a fluctuation amplitude falls within the specified range. If the voltage value input to the switch circuit 310 fluctuates greatly, the control unit 340 sends a control signal to the voltage regulator. After receiving the control signal, the voltage regulator converts the alternating current input by the mains system into the alternating current of the rated voltage, so that the power distribution circuit 300 supplies a stable alternating current to the alternating current load. In an example, the voltage regulator includes an AC/DC converter and a DC/AC converter. The AC/DC converter converts the alternating current input by the mains system into a direct current, and the DC/AC converter converts the direct current into an alternating current of a specified threshold. In this way, the alternating current input by the mains system is stabilized at the specified threshold, to improve stability of the alternating current.

The control unit 340 may monitor, in real time, the voltage value of the alternating current input to the switch circuit 310. If the control unit 340 obtains, through monitoring, that the voltage value of the alternating current input to the switch circuit 310 falls within the specified range, and fluctuates within the specified range or is less than the rated voltage of the alternating current load, the control unit 340 may generate a control signal based on a difference ΔV between a rated voltage of each alternating current load and a voltage value at an output end of the switch circuit 310, and send the control signal to the DC/AC converter 320. The DC/AC converter 320 receives the control signal, and converts the direct current input by the battery module into an alternating current of a specified voltage ΔV. The alternating current output through the DC/AC converter 320 may dynamically compensate for the alternating current input by the mains system, so that the power distribution circuit 300 outputs a stable alternating current.

In this embodiment of this application, after receiving the alternating current of the mains system, the power distribution circuit can provide electric energy for each alternating current load. The power distribution circuit may further convert the alternating current into the direct current of the specified voltage through the DC/AC converter and the DC/DC converter, and may provide electric energy for each direct current load. The power distribution circuit can provide electric energy for both the alternating current load and the direct current load.

If the alternating current input by the mains system is abnormal, the switch circuit stops inputting of the alternating current by the mains system. The control unit enables the DC/AC converter to convert the direct current input by the battery module into the alternating current of the specified voltage, to supply the alternating current of the specified voltage to each alternating current load. The direct current input by the battery module may supply the direct current of the specified voltage to each direct current load through the DC/DC converter. The power distribution circuit can continuously provide electric energy for the alternating current load and the direct current load.

If the alternating current input by the mains system is unstable, the control unit may control the DC/AC converter to convert the direct current input by the battery module into the alternating current of the specified voltage. The alternating current output through the DC/AC converter may compensate for the alternating current input by the mains system, so that the power distribution circuit outputs a stable alternating current. The DC/DC converter may convert another direct current into the direct current of the rated voltage, reduce a fluctuation amplitude of the direct current, and the like, and improve stability of the direct current, to help the power distribution circuit output a stable direct current.

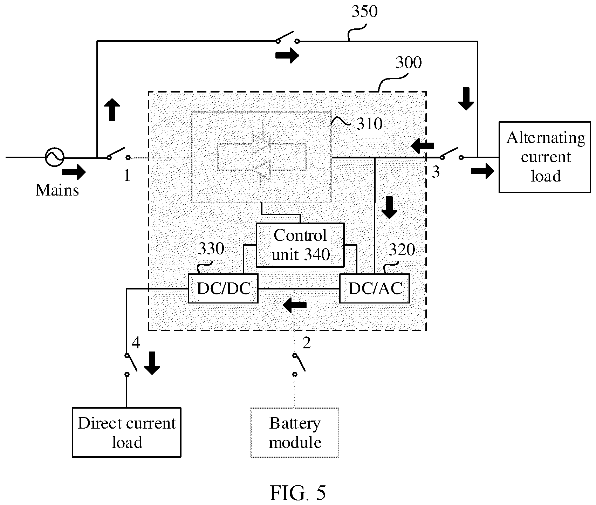

As shown in FIG. 5, the power distribution circuit 300 further includes a bypass circuit 350. One end of the bypass circuit 350 is electrically connected to the mains system, and the other end of the bypass circuit 350 is electrically connected to the alternating current load input end 3. A switch is disposed in the bypass circuit 350, and is configured to control conduction of the bypass circuit 350. If the alternating current input end 1 and the alternating current load input end 3 are disconnected, the switch in the bypass circuit 350 may be switched on. The alternating current input by the mains system is input to each alternating current load through the bypass circuit 350, to supply the alternating current to the alternating current load.

The alternating current input by the mains system may be input to each direct current load through the bypass circuit 350, the DC/AC converter 320, and the DC/DC converter 330. The DC/AC converter 320 converts the alternating current input by the mains system into a direct current, and the DC/DC converter 330 converts the direct current into a direct current of a rated voltage of a direct current load, to supply the direct current of the rated voltage to the direct current load. Optionally, the control unit 340 may control the battery module to perform a charging function. The DC/AC converter 320 converts the alternating current input by the mains system into the direct current, and the direct current is input to the battery module, so that the battery module is charged.

Compared with the solution shown in FIG. 4, in this solution, an input circuit is added in this embodiment. When a circuit in which the switch circuit 310 is located is short-circuited, the mains system may input the alternating current through the bypass circuit, thereby improving a fault tolerance rate of the power distribution circuit 300.

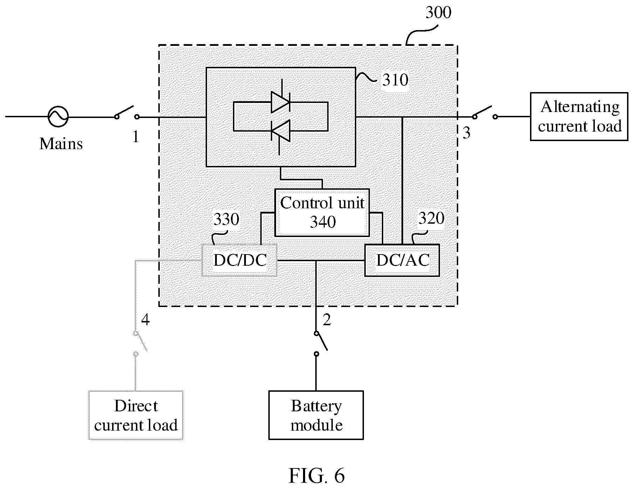

FIG. 6 is a schematic diagram of a scenario in which the power distribution circuit outputs only an alternating current according to an embodiment of this application. As shown in FIG. 6, the mains system may supply an alternating current to each alternating current load through the switch circuit 310. If an alternating current input by the mains system does not fall within a specified threshold range, the battery module may supply an alternating current to each alternating current load through the DC/AC converter 320.

The control unit 340 monitors a voltage value of an alternating current input to the switch circuit 310. The control unit 340 may determine, based on a monitoring result, whether the switch circuit 310 is in a first state. If the control unit 340 detects that the voltage value of the alternating current input to the switch circuit 310 falls within a specified range, the switch circuit 310 is in the first state, and the control unit 340 discards monitoring data received this time or does not perform subsequent processing. The power distribution circuit 300 inputs the alternating current input by the mains system to the alternating current load, to provide electric energy for the alternating current load.

If the control unit 340 detects that the voltage value of the alternating current input to the switch circuit 310 does not fall within a specified range, the switch circuit 310 is in a second state, and the power distribution circuit 300 stops power supplying of the mains system. The control unit 340 sends a control signal to the DC/AC converter 320, the DC/AC converter 320 converts a direct current input by the battery module into an alternating current of a specified voltage, and the battery module supplies the alternating current to the alternating current load. In this application, if the mains system is abnormal, the power distribution circuit 300 may provide electric energy for the alternating current load through the battery module, so that the power distribution circuit 300 continuously provides electric energy for the alternating current load.

Optionally, the control unit 340 may monitor, in real time, the voltage value of the alternating current input to the switch circuit 310. If the control unit 340 obtains, through monitoring, that the voltage value of the alternating current input to the switch circuit 310 falls within the specified range and fluctuates within the specified range, the control unit 340 may generate a control signal based on a difference ΔV between a rated voltage of each alternating current load and a voltage value at an output end of the switch circuit 310, and send the control signal to the DC/AC converter 320. The DC/AC converter 320 receives the control signal, and converts the direct current input by the battery module into an alternating current of a specified voltage ΔV The alternating current output through the DC/AC converter 320 may dynamically compensate for the alternating current input by the mains system, so that the power distribution circuit 300 outputs a stable alternating current.

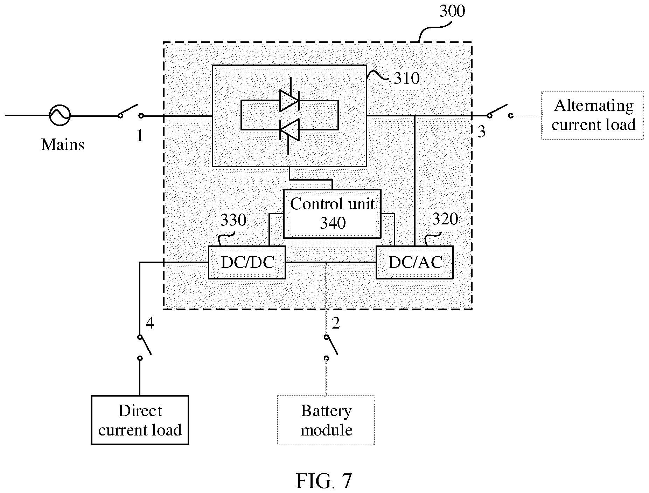

FIG. 7 is a schematic diagram of a scenario in which the power distribution circuit outputs only a direct current according to an embodiment of this application. As shown in FIG. 7, the mains system may supply a direct current to each direct current load through the switch circuit 310, the DC/AC converter 320, and the DC/DC converter 330. If an alternating current input by the mains system does not fall within a specified threshold range, the battery module may supply a direct current to each direct current load through the DC/DC converter 330.

The control unit 340 monitors a voltage value of an alternating current input to the switch circuit 310. The control unit 340 may determine, based on a monitoring result, whether the switch circuit 310 is in a first state. If the control unit 340 detects that a voltage value of an electrical signal input to the switch circuit 310 falls within a specified range, the switch circuit 310 is in the first state, and the control unit 340 discards monitoring data received this time or does not perform subsequent processing. The alternating current input by the mains system is input to the DC/AC converter 320, and the DC/AC converter 320 converts the alternating current into a direct current, and inputs the alternating current to the DC/DC converter 330. The DC/DC converter 330 converts the direct current into a direct current of a specified voltage, and inputs the direct current to each direct current load, to provide electric energy for the direct current load.

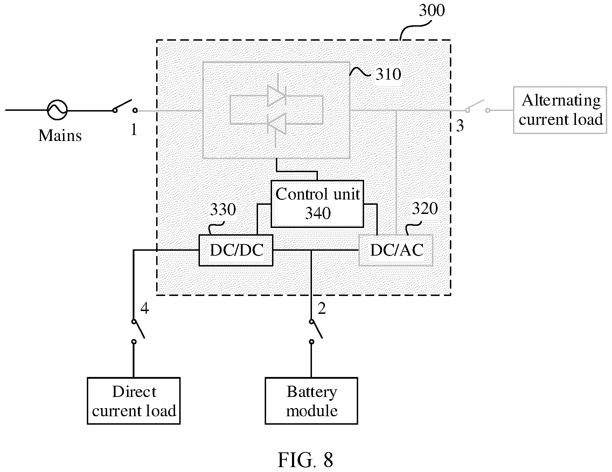

As shown in FIG. 8, if the control unit 340 detects that the voltage value of the alternating current input to the switch circuit 310 does not fall within a specified range, the switch circuit 310 is in a second state, and the power distribution circuit 300 stops power supplying of the mains system. The control unit 340 sends a control signal to the DC/DC converter 330, the DC/DC converter 330 converts the direct current input by the battery module into a direct current of a specified voltage, and the battery module supplies the direct current to the direct current load. In this application, if the mains system is abnormal, the power distribution circuit 300 may provide electric energy for the direct current load through the battery module, so that the power distribution circuit 300 continuously provides electric energy for the direct current load.

In this application, the DC/DC converter 330 may convert another direct current into a direct current of a rated voltage, reduce a fluctuation amplitude of the direct current, and the like, and improve stability of the direct current, to help the power distribution circuit 300 output a stable direct current.

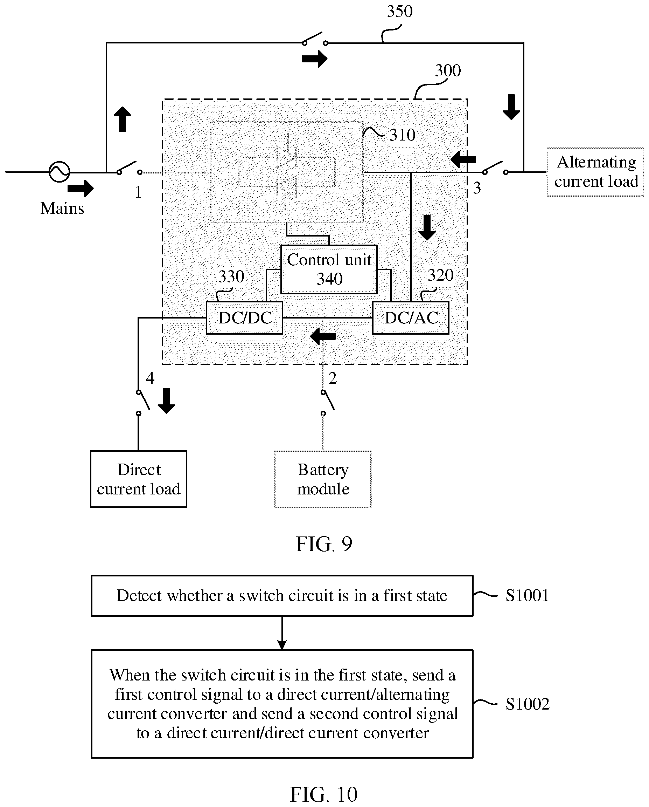

As shown in FIG. 9, the power distribution circuit 300 further includes a bypass circuit 350. When the alternating current input end 1 and the alternating current load input end 3 are disconnected, a switch in the bypass circuit 350 may be switched on. The alternating current input by the mains system may be input to each direct current load through the bypass circuit 350, the DC/AC converter 320, and the DC/DC converter 330. The DC/AC converter 320 converts the alternating current input by the mains system into the direct current, and the DC/DC converter 330 converts the direct current into a direct current of a rated voltage of a direct current load, to supply the direct current of the rated voltage to the direct current load.

Compared with the solution shown in FIG. 7, in this solution, an input circuit is added in this embodiment. When a circuit in which the switch circuit 310 is located is short-circuited, the mains system may input the alternating current through the bypass circuit, thereby improving a fault tolerance rate of the power distribution circuit 300.

FIG. 10 is a flowchart of a method for controlling power supplying of the power distribution circuit according to an embodiment of this application. As shown in FIG. 10, the method may be performed through the control unit 340, and a specific implementation process is as follows.

S1001: Detect whether the switch circuit is in a first state.

Specifically, the control unit is electrically connected to the switch circuit, and is configured to monitor a voltage value of an alternating current input to the switch circuit. If the voltage value of the alternating current input to the switch circuit falls within a specified range, the switch circuit is in a first state. In other words, the switch circuit is in a connected state, so that the alternating current input end 1 and the alternating current load input end 3 are connected. If the voltage value of the alternating current input to the switch circuit does not fall within a specified range, the switch circuit is in a second state. In other words, the switch circuit is in a disconnected state, so that the alternating current input end 1 and the alternating current load input end 3 are disconnected.

S1002: When the switch circuit is in the first state, send a first control signal to the direct current/altemating current converter and send a second control signal to the direct current/direct current converter.

Specifically, if the switch circuit is in the first state, an alternating current received through the alternating current input end 1 may be directly input to each alternating current load through the alternating current load input end 3, to supply the alternating current to the alternating current load. To supply power to a direct current load at the same time, the control unit may send a control signal to the DC/AC converter, so that the DC/AC converter converts an alternating current output through the switch circuit into a direct current. The control unit sends a control signal to the DC/DC converter, so that the DC/DC converter converts the direct current output through the DC/AC converter into a direct current of a specified voltage, to supply the direct current to the direct current load.

If the switch circuit is in the second state, the alternating current input end 1 cannot supply power to an alternating current load and a direct current load. In this case, a direct current input through the direct current input end 2 supplies power to the alternating current load and the direct current load. The control unit sends a control signal to the DC/AC converter, so that the DC/AC converter converts a direct current input by the battery module into an alternating current of a specified voltage, so that the battery module supplies the alternating current to the alternating current load. The control unit sends a control signal to the DC/DC converter, so that the DC/DC converter converts the direct current into the direct current of the specified voltage, so that the battery module supplies the direct current to the direct current load.

The control unit may monitor, in real time, the voltage value of the alternating current input to the switch circuit. If the control unit obtains, through monitoring, that the voltage value of the alternating current input to the switch circuit falls within the specified range and fluctuates within the specified range, the control unit may generate a control signal based on a difference between a rated voltage of each alternating current load and a voltage value at an output end of the switch circuit, and send the control signal to the DC/AC converter. The DC/AC converter receives the control signal, and converts the direct current input by the battery module into an alternating current of a specified difference voltage. The alternating current output through the DC/AC converter may dynamically compensate for the alternating current input by the mains system, so that the power distribution circuit outputs a stable alternating current.

In this embodiment of this application, after receiving the alternating current of the mains system, the power distribution circuit can provide electric energy for each alternating current load. The control unit may send the control signals to the DC/AC converter and the DC/DC converter, the DC/AC converter converts the received alternating current into the direct current, and the DC/DC converter converts the direct current output through the DC/AC converter into the direct current of the specified voltage, to provide electric energy for each direct current load. The power distribution circuit provides electric energy for both the alternating current load and the direct current load.

If the alternating current input by the mains system is abnormal, the switch circuit stops inputting of the alternating current by the mains system. The control unit enables the DC/AC converter to convert the direct current input by the battery module into the alternating current of the specified voltage, to supply the alternating current of the specified voltage to each alternating current load. The direct current input by the battery module may supply the direct current of the specified voltage to each direct current load through the DC/DC converter. The power distribution circuit continuously provides electric energy for the alternating current load and the direct current load.

An embodiment of this application provides a power supply system. The power supply system includes a power distribution circuit, an alternating current power supply, a direct current power supply, at least one alternating current load, and at least one direct current load. The alternating current power supply is coupled to an alternating current input end in the power distribution circuit, and is configured to supply an alternating current. The direct current power supply is coupled to a direct current input end in the power distribution circuit, and is configured to supply a direct current. The at least one alternating current load is coupled to an alternating current load input end of the power distribution circuit, and is configured to receive an alternating current. The at least one direct current load is coupled to a direct current load input end of the power distribution circuit, and is configured to receive a direct current. The power distribution circuit may be the power distribution circuit recorded in FIG. 3 to FIG. 9 and the foregoing corresponding protection solution. Because the power supply system includes the power distribution circuit, the power supply system has all or at least some advantages of the power distribution circuit. The power supply system may be used in power-consuming devices such as a data center, an outdoor cabinet, and a base station, or may be used in a home power supply system, a factory power supply system, or another power supply system. This is not limited in this application.

A quantity of components, a type of components, and the like in the power distribution circuit provided in embodiments of this application are not limited to the foregoing embodiments. All technical solutions implemented according to principles of this application fall within the protection scope of this solution. Technical solutions in which any one or more embodiments or figures in the specification are combined in a proper manner shall fall within the protection scope of this solution.

Finally, it is noted that the foregoing embodiments are merely used to describe the technical solutions of this application. A person of ordinary skill in the art should understand that, although this application is described in detail with reference to the foregoing embodiments, the technical solutions described in the foregoing embodiments may still be modified, or some technical features thereof may be equivalently replaced. Such modifications or replacements do not make the essence of the corresponding technical solutions depart from the spirit and scope of the technical solutions in embodiments of this application.

## Claims

1. A power distribution circuit, comprising: an alternating current input end, a direct current input end, an alternating current load input end, a direct current load input end, a switch circuit, a direct current/alternating current converter, a direct current/direct current converter, and a control unit, wherein
the switch circuit is coupled between the alternating current input end and the alternating current load input end, and is configured to control the alternating current load input end to output an alternating current input through the alternating current input end;
one end of the direct current/alternating current converter is coupled to the switch circuit and the alternating current load input end, the other end of the direct current/alternating current converter is coupled to the direct current input end and the direct current/direct current converter, and the direct current/altemating current converter is configured to perform conversion between a direct current and an alternating current;
one end of the direct current/direct current converter is coupled to the direct current/alternating current converter and the direct current input end, the other end of the direct current/direct current converter is coupled to the direct current load input end, and the direct current/direct current converter is configured to perform direct current conversion on an input direct current; and
the control unit is electrically connected to the switch circuit, the direct current/alternating current converter, and the direct current/direct current converter, and is configured to: detect a status of the switch circuit; and
when the switch circuit is in a first state, send a first control signal to the direct current/alternating current converter and send a second control signal to the direct current/direct current converter, wherein the first state is a state in which the switch circuit enables the alternating current input end and the alternating current load input end to be connected, the first control signal indicates the direct current/alternating current converter to convert the alternating current input through the alternating current input end into a direct current, and the second control signal indicates the direct current/direct current converter to perform direct current conversion on a direct current output through the direct current/altemating current converter.

2. The power distribution circuit according to claim 1, wherein the control unit is further configured to:
when the switch circuit is in a second state, send a third control signal to the direct current/alternating current converter and send a fourth control signal to the direct current/direct current converter, wherein the second state is a state in which the switch circuit enables the alternating current input end and the alternating current load input end to be disconnected, the third control signal indicates the direct current/alternating current converter to convert a direct current input through the direct current input end into an alternating current, and the second control signal indicates the direct current/direct current converter to perform direct current conversion on the direct current input through the direct current input end.

3. The power distribution circuit according to claim 1 or 2, wherein the switch circuit is a static transfer switch.

4. The power distribution circuit according to any one of claims 1 to 3, wherein the control unit is specifically configured to: monitor a voltage of the alternating current input through the alternating current input end; and
when the voltage of the alternating current input through the alternating current input end falls within a specified range, determine that the switch circuit is in the first state; or when the voltage of the alternating current input through the alternating current input end does not fall within a specified range, determine that the switch circuit is in the second state.

5. The power distribution circuit according to any one of claims 1 to 4, wherein the control unit is further configured to: monitor the voltage of the alternating current input through the alternating current input end; and
when the voltage of the alternating current input through the alternating current input end falls within the specified range and is less than a specified threshold, send a fifth control signal to the direct current/alternating current converter, wherein the fifth control signal indicates the direct current/altemating current converter to convert the direct current input through the direct current input end into an alternating current of a specified voltage, and the specified voltage is a difference between the specified threshold and the voltage of the alternating current input through the alternating current input end.

6. The power distribution circuit according to any one of claims 1 to 5, further comprising:
a voltage regulator, coupled between the alternating current input end and the alternating current load input end, and configured to convert the alternating current output through the alternating current load input end into an alternating current of the specified threshold.

7. The power distribution circuit according to any one of claims 1 to 6, further comprising:
a bypass circuit, coupled between the alternating current input end and the alternating current load input end, and configured to: when a circuit in which the switch circuit is located is disconnected, control the alternating current load input end to output the alternating current input through the alternating current input end, and/or control the direct current load input end to output a direct current.

8. A method for controlling power supplying of a power distribution circuit, comprising:
detecting whether a switch circuit is in a first state, wherein the first state is a state in which the switch circuit enables an alternating current input end and an alternating current load input end to be connected; and
when the switch circuit is in the first state, sending a first control signal to a direct current/alternating current converter and sending a second control signal to a direct current/direct current converter, wherein the first control signal indicates the direct current/alternating current converter to convert an alternating current input through the alternating current input end into a direct current, and the second control signal indicates the direct current/direct current converter to perform direct current conversion on a direct current output through the direct current/alternating current converter.

9. The method according to claim 8, wherein the method further comprises:
when the switch circuit is not in the first state, sending a third control signal to the direct current/alternating current converter and sending a fourth control signal to the direct current/direct current converter, wherein the third control signal indicates the direct current/alternating current converter to convert a direct current input through the direct current input end into an alternating current, and the second control signal indicates the direct current/direct current converter to perform direct current conversion on the direct current input through the direct current input end.

10. The method according to claim 8 or 9, wherein the detecting whether a switch circuit is in a first state comprises:
monitoring a voltage of the alternating current input through the alternating current input end; and
when the voltage of the alternating current input through the alternating current input end falls within a specified range, determining that the switch circuit is in the first state; or when the voltage of the alternating current input through the alternating current input end does not fall within a specified range, determining that the switch circuit is not in the first state.

11. The method according to any one of claims 8 to 10, wherein the method further comprises:
monitoring the voltage of the alternating current input through the alternating current input end; and
when the voltage of the alternating current input through the alternating current input end falls within the specified range and is less than a specified threshold, sending a fifth control signal to the direct current/alternating current converter, wherein the fifth control signal indicates the direct current/alternating current converter to convert the direct current input through the direct current input end into an alternating current of a specified voltage, and the specified voltage is a difference between the specified threshold and the voltage of the alternating current input through the alternating current input end.

12. A power supply system, comprising:
the power distribution circuit according to claims 1 to 7;
an alternating current power supply, coupled to the alternating current input end in the power distribution circuit, and configured to supply an alternating current;
a direct current power supply, coupled to the direct current input end in the power distribution circuit, and configured to supply a direct current;
at least one alternating current load, coupled to the alternating current load input end of the power distribution circuit, and configured to receive an alternating current; and
at least one direct current load, coupled to the direct current load input end of the power distribution circuit, and configured to receive a direct current.
